# EUROPEAN PATENT APPLICATION

(11) **EP 4 852 430 A1**
(43) Date of publication of application: **09.12.2026**
(21) Application number: 25305789.7
(22) Date of filing: 02.06.2025
(51) Int. Cl.: H04N 19/46, H04N 19/98

(54) **STATIC OR DYNAMIC OPTION FOR HDR - SDR INTEROPERABILITY METADATA**

(71) Applicant: InterDigital CE Patent Holdings, SAS, 75017 Paris (FR)
(72) Inventor: TOUZE, David, 35200 RENNES (FR); ALLIE, Valerie, 35230 SAINT-ARMEL (FR); REDMANN, William, GLENDALE, 91205 (US)
(74) Representative: Interdigital

(57) **Abstract**

A method comprising:
obtaining (601) input video data in an input dynamic range and a value of an element comprised in metadata allowing selecting between a static conversion based on fixed computation operations independent of the input video data and a dynamic conversion based on computation operations depending of the input video data to convert the input video data in output video data in an output dynamic range different from the input dynamic range; and,
converting (602) the input video data in the output video data applying a conversion selected between the static conversion and the dynamic conversion based on the value of the element.

## Description

### 1. TECHNICAL FIELD

At least one of the present embodiments generally relates to the field of production of High Dynamic Range (HDR) video and more particularly to a method, a device and a system implementing a signaling mechanism allowing identifying an appropriate HDR to SDR or SDR to HDR conversion in a single master production and distribution system. This signaling mechanism allows interoperability of different systems and technologies in a real workflow.

### 2. BACKGROUND

Recent advancements in display technologies allow for an extended dynamic range of color, luminance and contrast in images to be displayed. The term image refers here to an image content that can be for example a video or a still picture or image.

High-dynamic-range video (HDR video) describes video having a dynamic range greater than that of standard-dynamic-range video (SDR video). HDR video involves capture, production, content/encoding, and display. HDR capture and display devices are capable of brighter whites and deeper blacks. To accommodate this, HDR encoding standards allow for a higher maximum luminance and use at least a 10-bit dynamic range (compared to 8-bit for non-professional and 10-bit for professional SDR video) in order to maintain precision across this extended range.

HDR production is a new domain and there will be a transition phase during which both HDR contents and SDR contents will coexist. During this coexistence phase, a same live content will be produced simultaneously in a HDR and a SDR version. A user can then display the HDR or the SDR version of the content depending on his preferences or capabilities.

The current trend of the content production industry is first, to produce HDR contents and then to derive automatically SDR contents from the HDR contents using automatic tools (this is known as single-master production and distribution workflow); and, second, to apply a controlled and safe approach for the HDR production to avoid delivering bad HDR or SDR contents to users.

In that respect, some recommendations have been introduced by the ITU-R document "Report ITU-R BT.2408-7, Guidance for operational practices in HDR television production, 09/2023", just called BT.2408-7 in the following. One important recommendation introduced in BT.2408-7 is a constraint of HDR Diffuse White set to a fixed value equal to "203" nits. This constraint allows using fixed 3D-LUTs (Look-Up Tables) to implement SDR to HDR conversions (i.e. Inverse Tone Mapping (ITM)) and HDR to SDR conversions (Tone Mapping (TM)). Different static LUTs solutions are available on the market. These static LUTs have different characteristics (i.e., they use different diffuse white values, different maximum specular HDR values, different TM and ITM curves, different source and target transfer functions and they have different extended range usage).

Using these static LUTs makes the system being static, i.e., the conversions (either ITM or TM) are fixed and not adapted to dynamic characteristics of a content. Dynamic conversions, based on a use of a configurable and dynamic HDR Diffuse White level for both HDR to SDR (Tone Mapping) and SDR to HDR (Inverse Tone Mapping) conversions, offer solutions to deal with this issue.

A real workflow is made with many different systems from different providers. Nothing prevents the different providers implementing different solutions in their system, such as different static 3D-LUTs or dynamic solutions. However, systems implementing different solutions are generally not interoperable.

Interoperability metadata were recently defined to guide HDR to SDR and SDR to HDR conversions.

One can observe that some content producers are attached to static conversions and they don't want to introduce dynamic techniques in their systems, whereas others are open to use static or dynamic techniques. However, nothing is provided in the interoperability metadata to guide a choice of a static or a dynamic HDR to SDR and SDR to HDR conversion technology.

It is desirable to overcome the above drawbacks.

It is particularly desirable to propose mechanisms that allow ensuring the selection of the appropriate conversions and that allow ensuring interoperability of different systems and technologies in a real workflow.

### 3. BRIEF SUMMARY

**In** a first aspect, one or more of the present embodiments provide a method comprising
obtaining input video data in an input dynamic range;
obtaining metadata allowing a conversion of the input video data in output video data in an output dynamic range different from the input dynamic range; and,
transmitting the input video data and the metadata;
wherein, the metadata comprises an element allowing selecting between a static conversion based on fixed computation operations independent of the input video data and a dynamic conversion based on computation operations depending of the input video data for the conversion of the input video data in the output video data.

**In** a second aspect, one or more of the present embodiments provide a device comprising electronic circuitry configured for:
obtaining input video data in an input dynamic range;
obtaining metadata allowing a conversion of the input video data in output video data in an output dynamic range different from the input dynamic range; and,
transmitting the input video data and the metadata;
wherein, the metadata comprises one element allowing selecting between a static conversion based on fixed computation operations independent of the input video data and a dynamic conversion based on computation operations depending of the input video data for the conversion of the input video data in the output video data.

In an embodiment of the first or the second aspect, the element is a flag indicating with a first value to select the static conversion and with a second value to select the dynamic conversion.

In an embodiment of the first or the second aspect, the element is a syntax element indicating with a first value to select the static conversion, with a second value to select the dynamic conversion and with a third value that no conversion method is imposed.

In an embodiment of the first or the second aspect, the element is a syntax element indicating a preferred conversion method between the static conversion and the dynamic conversion.

In an embodiment of the first or the second aspect, the input dynamic range is a high dynamic range and the output dynamic range is standard dynamic range or the input dynamic range is a standard dynamic range and the output dynamic range is high dynamic range.

In an embodiment of the first or the second aspect, the metadata are transmitted using ancillary channels of a SDI interface or are embedded in SL-HDR1 metadata or are transmitted using a SEI message.

In a third aspect, one or more of the present embodiments provide a method comprising:
obtaining input video data in an input dynamic range and a value of an element comprised in metadata allowing selecting between a static conversion based on fixed computation operations independent of the input video data and a dynamic conversion based on computation operations depending of the input video data to convert the input video data in output video data in an output dynamic range different from the input dynamic range; and,
converting the input video data in the output video data applying a conversion selected between the static conversion and the dynamic conversion based on the value of the element.

In a fourth aspect, one or more of the present embodiments provide a device comprising electronic circuitry configured for:
obtaining input video data in an input dynamic range and a value of an element comprised in metadata allowing selecting between a static conversion based on fixed computation operations independent of the input video data and a dynamic conversion based on computation operations depending of the input video data to convert the input video data in output video data in an output dynamic range different from the input dynamic range; and,
converting the input video data in the output video data applying a conversion selected between the static conversion and the dynamic conversion based on the value of the element.

In an embodiment of the third or the fourth aspect, the element is a flag indicating with a first value to select the static conversion and with a second value to select the dynamic conversion.

In an embodiment of the third or the fourth aspect, the element is a syntax element indicating with a first value to select the static conversion, with a second value to select the dynamic conversion and with a third value that no conversion method is imposed.

In an embodiment of the third or the fourth aspect, the element is a syntax element indicating a preferred conversion method between the static conversion and the dynamic conversion.

In an embodiment of the third or the fourth aspect, responsive to the element is not received, the value of the element is inferred as indicating that no conversion method is imposed or the value of the element is inferred as indicating that the static conversion is preferred or the value of the element is inferred as indicating that the dynamic conversion is preferred.

In an embodiment of the third or the fourth aspect, the input dynamic range is a high dynamic range and the output dynamic range is standard dynamic range or the input dynamic range is a standard dynamic range and the output dynamic range is high dynamic range.

In a fifth aspect, one or more of the present embodiments provide a signal comprising metadata comprising an element allowing selecting between a static conversion and a dynamic conversion for a conversion of input video data in an input dynamic range into output video data in an output dynamic range, the static conversion being based on fixed computation operations independent of the input video data and the dynamic conversion being based on computation operations depending of the input video data.

### 4. BRIEF SUMMARY OF THE DRAWINGS

Fig. 1A illustrates a scale of luminance values in which appears the diffuse white;
Fig. 1B illustrates the separation of a scale of luminance values when the diffuse white is fixed to "203" nits;
Fig. 1C illustrates schematically a context of various embodiments;
Fig. 2 illustrates a Single-master HDR/SDR workflow;
Fig. 3A illustrates an example of luminance ITM curve compliant with characteristics provided by interoperability metadata;
Fig. 3B illustrates an example of luminance TM curve compliant with characteristics provided by interoperability metadata;
Fig. 4 illustrates a Single-master HDR/SDR workflow according to an embodiment;
Fig. 5 illustrates an example of process executed by a video source according to an embodiment;
Fig. 6 illustrates an example process executed by a system in charge of converting video data from a first dynamic range to a second dynamic range according to an embodiment;
Fig. 7 provide an example of process for introducing interoperability metadata in the SL-HDR1 metadata;
Fig. 8A illustrates schematically an example of hardware architecture of a processing module able to implement various aspects and embodiments;
Fig. 8B illustrates a block diagram of an example of a first system in which various aspects and embodiments are implemented; and,
Fig. 8C illustrates a block diagram of an example of a second system in which various aspects and embodiments are implemented;

### 5. DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

In the following, we introduce several notions used in various embodiments.

### Diffuse White:

As mentioned earlier, the BT.2408-7 report proposed some recommendations and in particular a constraint of diffuse white. The diffuse white is defined in BT.2408-7 report as *"the white provided by a card that approximates to a perfect reflecting diffuser by being spectrally grey, not just calorimetrically grey, by minimizing specular highlights and minimizing spectral power absorptance". A "perfect reflecting diffuser"* is defined as an *"ideal isotropic, nonfluorescent diffuser with a spectral radiance factor equal to unity at each wavelength of interest".*

In other words, the diffuse white is a luminance level of a video signal that separates:
- the scene with all the details, corresponding to the luminance levels that are below the diffuse white;
- the speculars: very bright pixels, generally close to white and with very few details, corresponding to the luminance levels that are above the diffuse white level.

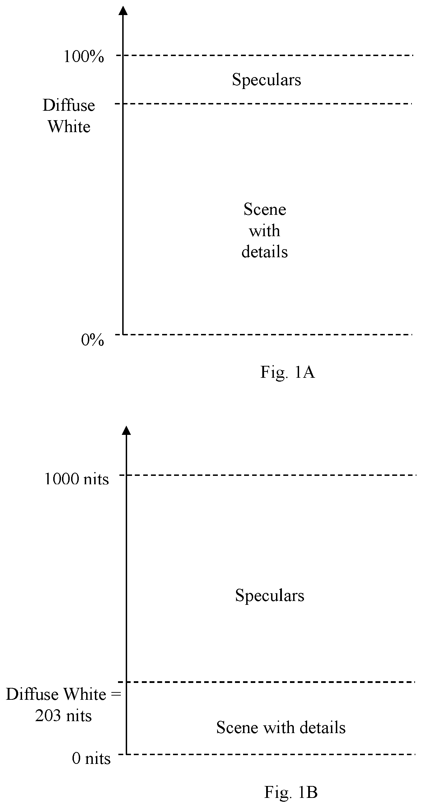

**Fig. 1A** illustrates a scale of luminance values in which appears the diffuse white. As can be seen, the diffuse white separates the sets of all possible luminance values in two parts.

The diffuse white notion is valid for HDR signals and for SDR signals.

BT.2408-7 specifies that HDR Diffuse White is equal to "203" nits.

However, the "203" nits constraint is only a recommendation and many content producers disagree with that recommendation. Indeed, a HDR diffuse white equal to "203" nits brings a major issue: the HDR content is constrained, i.e., for a typical "1000" nits HDR content, only a small amount of the HDR luminance range [0-203 nits] is dedicated to the details of a scene, while the largest part of the HDR luminance range [203 - 1000 nits] is reserved for speculars that bring no detail.

**Fig. 1B** illustrates the separation of a scale of luminance values when the diffuse white is fixed to "203" nits.

One of the reasons for this restriction is a need for controlled and "very safe" live HDR content production. In addition, this restriction has the following advantages:
- the implementation of the conversion from HDR to SDR (i.e. the tone mapping (TM)) is simpler as the HDR diffuse white defined at "203" nits needs to be mapped to SDR diffuse white that is generally defined between 90% and 100% SDR (i.e. between 90 nits and 100 nits). The tone mapping can be therefore implemented using a very basic static 3D-LUTs.
- the implementation of the conversion from SDR to HDR, (i.e. the inverse tone mapping (ITM)) is also simpler for the same reason and the inverse tone mapping can also be implemented with very basic static 3D-LUTs.

However, such ratio between the luminance values allocated to the details of the scene and the luminance values allocated to the speculars induced by the diffuse white at "203" nits renders the resulting HDR images very dull and not appealing.

### Reference levels:

A reference level is a luminance level of an object or a surrounding that represents a very large part of a scene. When capturing the scene, the operator generally adjusts the settings of the camera, based on the reference level. In BT.2408-7 section 2.2 "Signal levels for line-up in production", different examples of reference levels are provided, such as:
- the Grey card 18% luminance level, set at 26 nits for HDR (both PQ and HLG) (see Table 1 of BT.2408-7);
- different skin tones with different ranges (see Table 2 of BT.2408-7);
- grass level in a sport production (see Table 2 of BT.2408-7).

It is also mentioned in this section that the value of the reference level may vary depending on:
- indoor or outdoor conditions;
- the regions, i.e. skin tones are different in Asia than in Europe, than in America, etc.
- the global surroundings. For instance, in many sports, the field represents a large area in the scene and the different cameras in a set are adjusted to be aligned around a similar reference value, that can be different depending on the sports (grass in football, clay in tennis, ...), the region, etc.

### Narrow Range and Narrow-Full Range:

As described in recommendations ITU-R BT.709-6 (*Recommendation ITU-R BT. 709-6, Parameter values for the HDTV standards for production and international program exchange, 06*/*2015)* and ITU-R BT. 2100-2 (*Recommendation ITU-R BT.2100-2, Image parameter values for high dynamic range television for use in production and international program exchange, 07*/*2018),* typical video signals are transmitted using a YCbCr representation, also named YUV representation.

In that representation, quantization levels are defined from a lowest value to a highest value. For instance, when using a "10" bits quantization, luminance values are defined between the lowest value "64" (black) and the highest value "940" (white) and chrominance values are defined between the lowest value "64" and the highest value "960". These allowed ranges are commonly named *Legal Range* or *Narrow Range* or *Normal Range.* In the latter, we will use the term *Narrow Range* (NR).

However, recommendations ITU-R BT.709-6 and ITU-R BT. 2100-2 also state that video data can take values from "4" to "1019".

The EBU R 103 (*Recommendation EBU R103, Video signal tolerance in digital video systems version 3.0, 05*/*2020)* recommendation gives some explanations on why some tolerance is needed when generating a YCbCr signal and recommends to not exceed the range [20-984].

However, some implementations do not follow the range [20-984] recommended by the recommendation EBU R103 and make use of the range [4-1019] or any range starting with a value in the range [4-63] and ending with a value in the range [941-1019].

The combinations of the ranges [4-63] and [941-1019] (respectively [961-1019]) with the NR range [64-940] (respectively [64-960]) is named *Narrow Full Range* (NFR) in the latter.

The range [4-63] is called *Infra blacks* in the latter.

The range [941-1019] (respectively [961-1019]) is called *Super Whites* in the latter.

Typically, the 3D-LUTs implementations are using these infra blacks and super whites ranges. For example, the Super Whites range is typically used for carrying extra dynamic range that can be useful when doing SDR to HDR or HDR to SDR conversions.

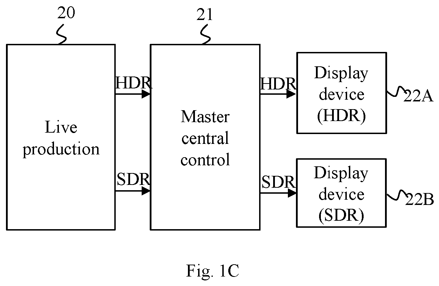

Fig. 1C illustrates an example context in which various embodiments are implemented.

In Fig. 1C, a live production system 20 is communicating with a master central control system 21. The live production system 20 provides simultaneously a HDR version and a SDR version of a same live content.

The master central control system 21 then encodes the same or an enriched version of these SDR and HDR versions and provides these encoded versions to devices 22A and 22B. In an embodiment, the master central control system 21 encodes the HDR and SDR versions using an AVC ((ISO/CEI 14496-10 / ITU-T H.264) encoder, an HEVC (ISO/IEC 23008-2 - MPEG-H Part 2, High Efficiency Video Coding / ITU-T H.265)) encoder, a VVC (ISO/IEC 23090-3 - MPEG-I, Versatile Video Coding/ ITU-T H.266) encoder or any other encode such as AOM VP9, AV1, AV2.

Devices 22A and 22B are display devices such as a PC, a TV, a smartphone, a tablet or a head mounted display or a device connected to a display device such as a set top box. The device 22A that have HDR capabilities receives an encoded HDR version. The device 22B that have only SDR capabilities receives an encoded SDR version.

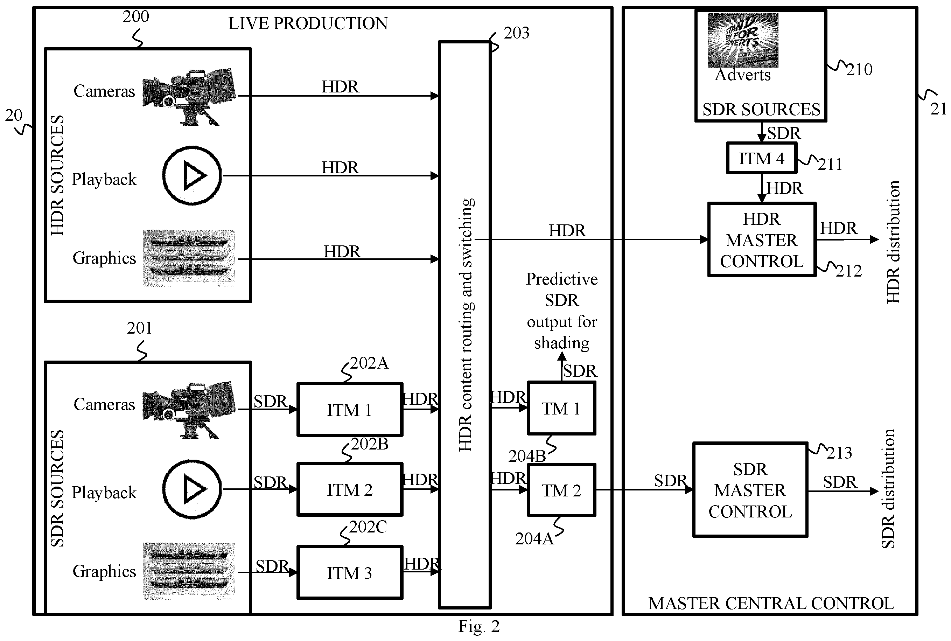

**Fig. 2** illustrates a Single-master HDR/SDR workflow. Fig. 2 provides details on the live production system 20 and the master central control system 21.

The live production system 20 comprises two sources: a HDR source 200 and a SDR source 201. Each source comprises at least one of a camera, a playback system or a system that generates graphics. The SDR source 201 is connected to a plurality of ITM tools:
- one ITM tool 202A (ITM1) for SDR camera output up-conversion to HDR;
- one ITM tool 202B (ITM2) for SDR playback content up-conversion to HDR; and,
- one ITM tool 202C (ITM3) for SDR graphics (score insertion for instance) content up-conversion to HDR.

A HDR content routing and switching system 203 ingests the multiple HDR inputs that come either from the HDR source 200 or from the SDR source 201 and then generates multiple HDR outputs.

From these HDR outputs, multiple TM tools are used:
- A TM tool 204B (TM1) for generating a predictive SDR output that is used by shaders operators that assess a quality of the generated SDR contents that are sent to the master central control system 21.
- A TM tool 204A (TM2) for generating a SDR provided to the master central control system 21.

The master central control system 21 comprises a HDR master control system 212 and a SDR master control system 213. The HDR and SDR master control systems are in charge of distributing SDR/HDR contents. In the example of Fig. 2, the master central control system 21 comprises a source 210 generating adverts in SDR and an ITM tool 211 that convert the adverts from SDR to HDR. The HDR master control system 212 receives these adverts converted in HDR and mixes these adverts with the HDR content it receives. The HDR (respectively the SDR) master control system 212 (respectively 213) encode the HDR (respectively the SDR data) it receives or resulting from a mixture of the HDR (respectively SDR) data it receives with other data. For example, the SDR and HDR data are encoded by an AVC encoder, an HEVC encoder, a VVC encoder or any other encoder.

As can be seen in Fig. 2, a HDR content may originate from the native HDR source 200.

In the past, before introducing interoperability metadata described below, as the HDR content needs to be converted to SDR, there were no way for the TM tool 204B (TM1) and/or the TM tool 204A (TM2) to know characteristics of the HDR content (originating either form a HDR source 200 or a SDR source up-converted to HDR with an ITM (202A, 202B, 202C)) such as the HDR diffuse white value, the HDR reference level value, the NFR value and at which SDR diffuse white mapping the HDR diffuse white nor at which SDR reference level mapping the HDR reference level.

If a TM tool (204A or 204B) uses a specific static 3D-LUT, the only solution was to make sure that the HDR content is configured correctly to produce a video signal compatible with this specific 3D-LUT. However, nothing was preventing an HDR content provider to configure the HDR content in a different way that is not compatible anymore with this specific 3D-LUT. Similarly, nothing was preventing a TM tool configurator to choose a different static 3D-LUT that is not compatible with the HDR content. Indeed, different static 3D-LUTs solutions are available on the market. One can mention the following static 3D-LUTs based solutions:
- BBC LUTs (*Release Notes for HLG Format Conversion LUTs v1.5, BBC Research, 05*/*2021, http:*//*downloads.bbc.co.uk*/*rd*/*pubs*/*papers*/*HDR*/*BBC_HDRTV_HLG_ LUT_Release_Notes*_*v1-5.pdf*) *:* Current version 1.5 of the BBC LUTs solution describes "20" different 3D-LUTs for different usages/configurations;
- NBCU LUTs (NBCUniversal Single-Master Broadcast Production and Distribution Recommendations #NBCU-Rec-UHD-HDR-01.13, September 23nd, 2022, https://github.com/digitaltvguy/NBCUniversal-UHD-HDR-SDR-Single-Master-Production-Workflow-Recommendation-LUTs)*:* Current version 1.13 of the NBCU LUTs solution describes "5" different 3D-LUTs for different usages/configurations;
- Recently during the FIFA World Cup in Qatar, HBS has designed its own HDR to SDR 3D-LUT, (see https://www.sportsvideo.org/2022/12/07/live-from-the-fifa-world-cup-hbs-ceo-dan-miodownik-cto-christian-gobbel-reflect-on-efforts-to-date/).

All of these static LUTs are different, i.e.,:
- the HDR and SDR diffuse white values are different;
- the HDR and SDR reference level values are different;
- the maximum specular HDR values are different, due to different usage of the SDR maximum NFR and HDR maximum NFR values;
- the NFR usage of these LUTs are different;
- the HDR value mapping to the maximum SDR NR value is different;
- the Tone Mapping and Inverse Tone Mapping curves are different;
- the source and target transfer function may be different (HDR transfer function can be HLG or PQ).

Table TAB1 represents values of SDR and HDR diffuse white, of SDR and HDR reference levels, of SDR maximum NR, of HDR value from SDR maximum NR, of SDR maximum NFR and HDR value from SDR maximum NFR for an ITM and a TM:

**Table TAB1**

| **ITM** | | | | | | | | |
|---|---|---|---|---|---|---|---|---|
| LUT name | Luminance (nits) | | | | | | | |
| | SDR Diffuse White | HDR Diffuse White | SDR Reference level | HDR Reference level | SDR max NR | HDR value from SDR max NR | SDR max NFR | HDR value from SDR max NFR |
| NBCU LUT 1 | 100 | 203 | 12,8 | 26 | 100 | 203 | 124 | 252 |
| NBCU LUT 2 | 100 | 203 | 12,8 | 26 | 100 | 203 | 124 | 252 |
| NBCU LUT 4 | 100 | 203 | 12,8 | 26 | 100 | 203 | 124 | 248 |
| BBC LUT 3 | 100 | 203 | 6 | 18,5 | 100 | 203 | 124 | 260 |
| BBC LUT 5 | 100 | 313 | 6 | 16,2 | 100 | 313 | 124 | 676 |

| **TM** | | | | | | | | |
|---|---|---|---|---|---|---|---|---|
| LUT name | Luminance (nits) | | | | | | | |
| | HDR Diffuse White | SDR Diffuse White | HDR Reference level | SDR Reference level | HDR value mapped to SDR max NR | SDR max NR | HDR max value | SDR max NFR from HDR max value |
| NBCU LUT 3 | 203 | 86 | 26 | 12,8 | 294 | 100 | 1810 | 1006 |
| NBCU LUT 5 | 203 | 86 | 26 | 12,8 | 289 | 100 | 24030 | 1019 |
| BBC LUT 8 | 203 | 78 | 29,7 | 18,1 | 1000 | 100 | 1810 | 959 |

This variety of static 3D LUTs creates a risk of misconfiguration.

If a tone mapping tool uses a dynamic solution (for instance based on SL-HDR1 *(*ETSI TS 103 433-1 v1.4.1, High-Performance Single Layer High Dynamic Range (HDR) System for use in Consumer Electronics devices; Part 1: Directly Standard Dynamic Range (SDR) Compatible HDR System (SL-HDR1), 08/2021*)),* it can adapt to the content thanks to its dynamic nature. However, the conversion may not be optimal, as the tone mapping tool is lacking information such as the HDR and SDR Diffuse White values, the HDR and SDR Reference Levels values and NFR usage. Knowing this information would allow the dynamic tone mapping tools to produce a more optimal HDR to SDR conversion.

Another aspect of Fig. 2 is that the output of the HDR master control system 212 is a mixture of a main HDR video content with native SDR content. Such a situation commonly occurs in the case of diffusion of Live HDR contents. For example, during a diffusion of a content representing a live video event, logos, scores and adverts are mixed to a main HDR video representing the live sport event. As in the example of Fig. 2, the added contents can be SDR and need therefore to be converted in HDR before being mixed with the main HDR video content. Since the resulting mixed HDR content is likely to be converted in SDR, a new constraint appears: the SDR content resulting from the so-called *SDR-HDR-SDR round trip conversion* (i.e. ITM conversion followed by a TM conversion (for SDR delivery)) of these added contents must be identical to the original SDR content. The same SDR-HDR-SDR round trip constraint exists when a content producer generates a HDR content from an original SDR content but wishes that a SDR content generated, for any reason, from this HDR content to be identical to the original SDR content.

In a context wherein the use static LUTs and/or dynamic solutions is not controlled, the risk of misconfiguration and therefore the risk of being unable to respect the SDR-HDR-SDR round trip constraint is high.

Interoperability metadata were introduced to provide a solution allowing interoperability between systems of a single-master HDR/SDR workflow while allowing respecting the SDR-HDR-SDR round trip constraint.

The interoperability metadata comprise eight elements:
- a HDR Diffuse White value *HDR_DW*: *HDR_DW* gives a HDR Diffuse White value for the HDR content. HDR pixels with luminance above *HDR_DW* are considered as speculars in the HDR content. In the case of a potential subsequently SDR to HDR conversion, it indicates on which HDR Diffuse White value a SDR Diffuse White (defined below) value should be mapped. It can be expressed in nits or any coding representation that relates to values in nits.
- a SDR Diffuse White value *SDR_DW: SDR_DW* gives a SDR Diffuse White value for a desired subsequent HDR to SDR (TM) conversion. SDR pixels with luminance above SDR_DW are considered as speculars in the SDR content resulting from the TM conversion. It indicates on which SDR Diffuse White value the HDR Diffuse White value HDR_DW should be mapped. It can be expressed in nits or any coding representation that relates to values in nits. If the HDR content is a native HDR content from a HDR source and if *SDR_DW* is not present in the metadata, then the TM tool is free to select the SDR Diffuse White value. If the HDR content originates from a SDR source that has been converted to HDR, *SDR_DW* can indicate either:
   ∘ the SDR Diffuse White value of the SDR content that has been mapped on the HDR Diffuse White value HDR_DW during the ITM conversion. It allows a subsequent TM conversion to map the HDR Diffuse White value to the SDR Diffuse White value SDR_DW. This information allows therefore to meet the SDR-HDR-SDR round trip constraint; or,
   ∘ the SDR Diffuse White value to which the HDR Diffuse White value *HDR*_*DW* should be mapped by a subsequent TM conversion. This SDR Diffuse White value SDR_DW may be different from the source SDR Diffuse White value, as it is, for instance, in the NBCU LUTs (source SDR Diffuse White is "100" nits and output SDR Diffuse White is "86" nits).
- a HDR Reference Level value *HDR_RL: HDR_RL* gives a HDR Reference Level value for the HDR content. In the case of a potential subsequent SDR to HDR conversion, it indicates on which HDR Reference Level value a SDR Reference Level (defined below) value should be mapped. It can be expressed in nits or any coding representation that relates to values in nits. If the HDR content is a native HDR content from a HDR source and if *HDR_RL* is not present in the metadata, then the TM tool is free to select the HDR Reference Level value. If the HDR content originates from a SDR source that has been converted to HDR, *HDR_RL* can indicate either:
   ∘ the HDR Reference Level value of the HDR content to which the SDR Reference Level value SDR_RL has been mapped during the ITM conversion. It allows a subsequent TM conversion to map the HDR Reference Level HDR_RL value to the SDR Reference Level value SDR_RL. This information allows therefore to meet the SDR-HDR-SDR round trip constraint,
   ∘ the HDR Reference Level value that should map to the SDR Reference Level value *SDR_RL* during a subsequent TM conversion. This HDR Reference Level value HDR_RL may be different from the HDR Reference Level value used during the ITM conversion, as it is, for instance, in the BBC LUTs 3 and 8 (HDR Reference Level is "18,5" nits in BBC LUT 3 and output SDR Reference Level is "29,7" nits in BBC LUT 8).
- a SDR Reference Level value *SDR_RL: SDR_RL* gives a SDR Reference Level value for a desired subsequent HDR to SDR (TM) conversion. It indicates on which SDR Reference Level value the HDR Reference Level value HDR_RL should be mapped. It can be expressed in nits or any coding representation that relates to values in nits. If the HDR content is a native HDR content from a HDR source and if *SDR_RL* is not present in the metadata, then the TM tool is free to select the SDR Reference Level value. If the HDR content originates from a SDR source that has been converted to HDR, *SDR_RL* can indicate either:
   ∘ the SDR Reference Level value of the SDR content that has been mapped on the HDR Reference Level value HDR_RL during the ITM conversion. It allows a subsequent TM conversion to map the HDR Reference Level value to the SDR Reference Level value SDR_RL. This information allows therefore to meet the SDR-HDR-SDR round trip constraint,
   ∘ the SDR Reference Level value to which the HDR Reference Level value *HDR_RL* should be mapped by a subsequent TM conversion. This SDR Reference Level value SDR_RL may be different from the source SDR Reference Level value, as it is, for instance, in the BBC LUTs 3 and 8 (source SDR Reference Level is "6" nits in BBC LUT 3 and output SDR Reference Level is "18,1" nits in BBC LUT 8).
- a HDR Narrow Range (NR) value *HDR_NR: HDR_NR* gives the HDR luminance value that needs to be mapped on the Narrow Range maximum luminance value (i.e., "940" in "10" bits codeword) of the SDR content during a subsequent TM conversion.
- a HDR Narrow Full Range value *HDR_NFR: HDR_NFR* gives the HDR maximum luminance value that needs to be mapped to the narrow full range maximum luminance value SDR_NFR_MAX of the SDR content during a subsequent TM conversion.
- a SDR Narrow Full Range maximum value *SDR_NFR_MAX: SDR_NFR_MAX* gives the highest luminance allowed value used in the upper part of the SDR Narrow Full Range, corresponding to the *HDR_NFR* value of the corresponding HDR content. The value can be expressed by either a "8" bits, "10" bits or "12" bits value, or by a percentage of the narrow range. For instance, this value equals "1019" in 10 bits (or 109% in percentage of the narrow range) for SDI / Total Video signal range, and "984" in "10" bits codeword (or 105% in percentage of the narrow range) per EBU R103 recommendation. *SDR_NFR_MAX* cannot be lower than the maximum Narrow Range value, i.e., "940" in 10 bits (or 100%).
- a Narrow Full Range minimum value *NFR_MIN: NFR_MIN* gives the lowest allowed value used in the lower part of the Narrow Full Range. The value can be expressed by either a "8" bits, "10" bits or "12" bits value, or by a percentage of the narrow range. For instance, this value equals "4" in "10" bits codeword (or -6.84% in percentage of the narrow range) for SDI / Total Video signal range, and "20" in "10" bits codeword (or -5% in percentage of the narrow range) per EBU R103 recommendation. This value cannot be higher than the minimum Narrow Range value, i.e., "64" in "10" bits (or 0%).

The Interoperability metadata (and in particular the "8" elements) allows defining characteristics that must be respected by TM and ITM curves (implemented in any static conversions in the form of 3D-LUTs for instance or implemented in any dynamic solutions) used by TM and ITM tools in a single-master HDR/SDR workflow.

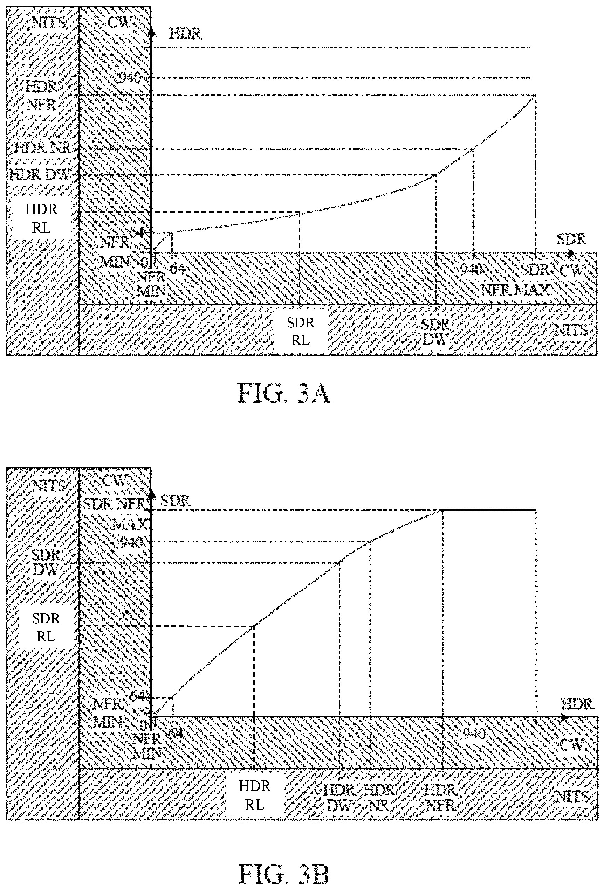

**Fig. 3A** illustrates an example of luminance ITM curve compliant with the characteristics provided by the interoperability metadata.

In the example of Fig. 3A:
- The *NFR_MIN* value (for instance equal to "4" for a "10" bits codeword) of the input SDR content is mapped to the same *NFR_MIN* value (i.e., "4" for a "10" bits codeword in this example) of the output HDR content.
- The Narrow Range minimum value ("64" for a "10" bits codeword) of the input SDR content is mapped to the same Narrow Range minimum value ("64" for a "10" bits codeword) of the output HDR content.
- The *SDR_DW* value of the input SDR content is mapped to the *HDR_DW* value of output HDR content.
- The *SDR_RL* value of the input SDR content is mapped to the *HDR_RL* value of output HDR content.
- The Narrow Range maximum value ("940" for a "10" bits codeword) of the input SDR content is mapped on the *HDR_NR* value of output HDR content.
- The *SDR_NFR_MAX* value (for instance equal to "1019" for a "10" bits codeword) of the input SDR content is mapped to the *HDR_NFR* value of output HDR content.

**Fig. 3B** illustrates an example of luminance TM curve compliant with the characteristics provided by the interoperability metadata.

In the example of Fig. 3B:
- The *NFR_MIN* value (for instance equal to "4" for a "10" bits codeword) of the input HDR content is mapped to the same *NFR_MIN* value (i.e., "4" for a "10" bits codeword in this example) of the output SDR content.
- The Narrow Range minimum value ("64" for a "10" bits codeword) of the input HDR content is mapped to the same Narrow Range minimum value ("64" for a "10" bits codeword) of the output SDR content.
- The *HDR_DW* value of the input HDR content is mapped to the *SDR_DW* value of output SDR content.
- The *HDR_RL* value of the input HDR content is mapped to the *SDR_RL* value of output SDR content.
- The *HDR_NR* value of the input HDR content is mapped to the Narrow Range maximum value ("940" for a "10" bits codeword) of the output SDR content.
- The *HDR_NFR* value of input HDR is mapped to the *SDR_NFR_MAX* value (for instance equal to "1019" for a "10" bits codeword) of the output SDR content.

Any static 3D-LUT can be characterized using the interoperability metadata. As an example, in table TAB2, we mapped the "8" elements provided by the Interoperability metadata on the values of SDR and HDR diffuse white, of SDR and HDR reference level, of SDR maximum NR, of HDR value from SDR maximum NR, of SDR maximum NFR and HDR value from SDR maximum NFR characterizing the existing 3D-LUTs represented in table TAB1 for a TM and an ITM.

**Table TAB2**

| **ITM** | | | | | | | | |
|---|---|---|---|---|---|---|---|---|
| LUT name | Luminance (nits) | | | | | | Code Word (10 bits) | |
| | SDR*_*DW | HDR_DW | SDR*_*RL | HDR RL | HDR NR | HDR NFR | NFR_MIN | SDR*_*NFR MAX |
| NBCU LUT 1 | | 203 | 13 | 26 | 203 | 252 | 4 | 1019 |
| NBCU LUT 2 | 100 | 203 | 13 | 26 | 203 | 252 | 4 | 1019 |
| NBCU LUT 4 | 100 | 203 | 13 | 26 | 203 | 248 | 4 | 1019 |
| BBC LUT 3 | 100 | 203 | 6 | 18 | 203 | 260 | 4 | 1019 |
| BBC LUT 5 | 100 | 313 | 6 | 16 | 313 | 676 | 4 | 1019 |

| **TM** | | | | | | | | |
|---|---|---|---|---|---|---|---|---|
| LUT name | Luminance (nits) | | | | | | Code Word (10 bits) | |
| | SDR*_*DW | HDR*_*DW | SDR*_*RL | HDR_RL | HDR_NR | HDR*_*NFR | NFR_MIN | SDR*_*NFR_MAX |
| NBCU LUT 3 | 86 | 203 | 13 | 26 | 294 | 1810 | 4 | 1006 |
| NBCU LUT 5 | 86 | 203 | 13 | 26 | 289 | 24030 | 4 | 1019 |
| BBC LUT 8 | 78 | 203 | 18 | 30 | 1000 | 1810 | 4 | 959 |

More generally, any static converter can be characterized using the interoperability metadata. Similarly, any dynamic converter that is able to manage these interoperability metadata can produce dynamic conversion curves that are compatible with the interoperability metadata.

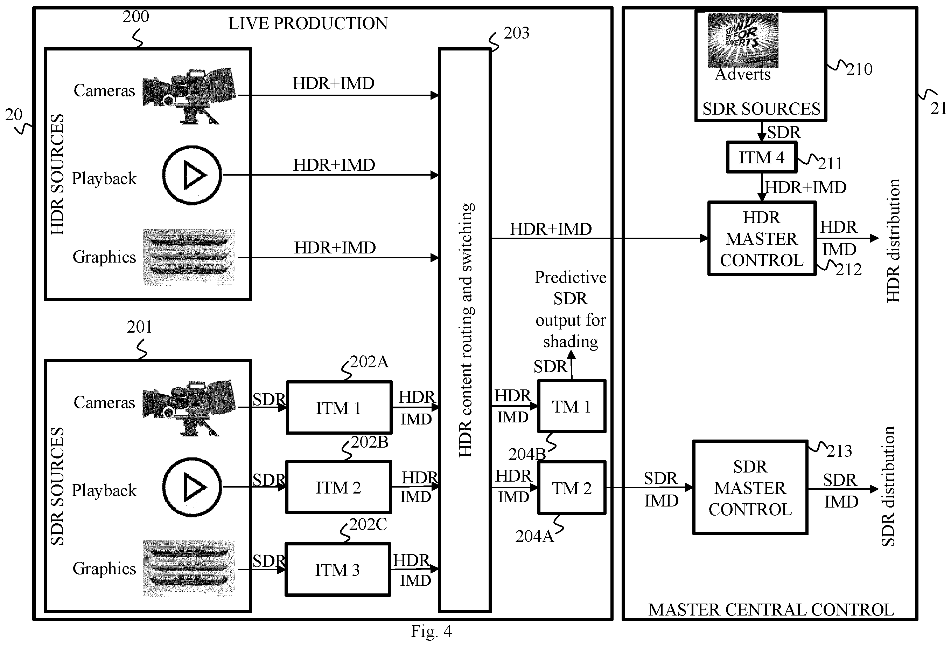

**Fig. 4** illustrates the Single-master HDR/SDR workflow of Fig. 2 in which the interoperability metadata (IMD) are used.

As can be seen in Fig. 4, each system generating HDR data, transmits interoperability metadata along the HDR data. The system generating HDR data comprises the HDR source 200, the ITM tools 202A, 202B and 202C and 211.

In an embodiment, the interoperability metadata are provided to the TM tools 204A and 204B to guide the TM process applied to the HDR data to generate the SDR data.

In an embodiment, the interoperability metadata are distributed along the HDR data by the HDR master control system 212. In this embodiment, the interoperability metadata are used to guide a TM process applied on the distributed HDR data.

In an embodiment, it is also possible to associate interoperability metadata to SDR data. In that case the interoperability metadata are generated by a system generating SDR data. A system generating SDR data is for example the SDR source 201, the TM tools 204A and 204B. In the example of Fig. 4, when associated to SDR data, the interoperability metadata can be distributed along the SDR data by the SDR master control system 213. In this case, the interoperability metadata are used to guide an ITM process applied on the distributed SDR data.

As can be seen in the example of table TAB2, the interoperability metadata could allow characterizing either a TM process or a ITM process.

When transmitted along HDR data, interoperability metadata characterizing a TM process allows for instance a TM tool to identify directly which TM process (i.e., which TM curve or 3D LUT defining a TM curve) applying.

When transmitted along HDR data, interoperability metadata characterizing a ITM process allows for instance a TM tool to identify characteristics of the HDR data or which ITM process (i.e., which ITM curve or 3D LUT defining a ITM curve) was applied to obtain the HDR data. In that case, from the interoperability metadata, the TM tool can determine a TM process compatible with the characteristics of the HDR data or with the ITM process applied to obtain the HDR data. In some embodiments, the determined TM process could ensure the SDR-HDR-SDR round trip constraint.

When transmitted along SDR data, interoperability metadata characterizing a ITM process allow for instance a ITM tool to identify directly which ITM process (i.e., which ITM curve or 3D LUT defining a ITM curve) applying.

When transmitted along SDR data, interoperability metadata characterizing a TM process allow for instance a ITM tool to identify characteristics of the SDR data or which TM process (i.e., which TM curve or 3D LUT defining a TM curve) was applied to obtain the SDR data. In that case, from the interoperability metadata, the ITM tool can determine an ITM process compatible with the characteristics of the SDR data or with the TM process applied to obtain the SDR data. Again, the determined ITM process could ensure the HDR-SDR-HDR round trip constraint.

While the eight elements of the interoperability metadata define boundaries for the HDR to SDR and SDR to HDR conversions, there is no information regarding the choice of the desired conversion technology between a static conversion or a dynamic conversion.

In the following we define a static conversion as generally based on a use of static LUTs but that can also be implemented as fixed computation operations to each image or group of images whatever the characteristics of the content. In other words, the statics LUTs or the fixed computation operations are independent of the converted content. A static conversion is for instance based on one of the 3D LUTs of table TAB1.

Similarly, we define a dynamic conversion as generally based on a use of LUTs dynamically adapted to each image or group of images but that can also be implemented as computation operations dynamically adapted to each image or group of images. In other words, the LUTs or the computation operations depend on the converted content. A dynamic conversion is for instance based on SL-HDR1, SL-HDR2 (ETSI TS 103 433-2 V1.3.1 (2021-08), High-Performance Single Layer High Dynamic Range (HDR) System for use in Consumer Electronics devices; Part 2: Enhancements for Perceptual Quantization (PQ) transfer function based High Dynamic Range (HDR) Systems) or SL-HDR3 (ETSI TS 103 433-1 V1.4.1 (2021-08, High-Performance Single Layer High Dynamic Range (HDR) System for use in Consumer Electronics devices; Part 1: Directly Standard Dynamic Range (SDR) Compatible HDR System).

In the following, we propose a new element *StaticOrDynamicConversion* that informs on the desired technology, either static or dynamic, that needs to be used in any HDR to SDR or SDR to HDR conversion in a Single-stream HDR-SDR production and distribution workflow.

The new element *StaticOrDynamicConversion* could be included as a ninth element of the interoperability metadata or as an independent metadata called *static dynamic interoperability metadata.* The new element *StaticOrDynamicConversion* allows to correctly select a desired technology (dynamic or static) to be used for HDR to SDR conversions or SDR to HDR conversions in a Single-stream HDR-SDR production and distribution workflow.

The element *StaticOrDynamicConversion* specifies a type of conversion to be used for the HDR to SDR or the SDR to HDR conversion, between a static conversion and a dynamic conversion.

In a first embodiment, the element *StaticOrDynamicConversion* is a flag indicating with a first value (for example "0") to select a static conversion and with a second value (for example equal to "1") to select a dynamic conversion.

In a second embodiment, the element *StaticOrDynamicConversion* is a syntax element indicating with a first value to select a static conversion, indicating with a second value to select a dynamic conversion and indicating with a third value that a system is free to select a static or dynamic conversion. The third value indicates therefore that no conversion method is imposed.

In a third embodiment, the element *StaticOrDynamicConversion* is a syntax element covering a range of values [A, B]. The system is free to select between a dynamic or a static conversion. However, the more the syntax element value is close to A, the more the system is incited to select the dynamic conversion, the more the syntax element value is close to B, the more the system is incited to select the static conversion. The syntax element of the third embodiment indicates therefore a preferred conversion method between the static and the dynamic conversion. This third embodiment allows the system to determine the risk taken in selected the conversion technology that is not preferred instead of the preferred conversion technology.

In an embodiment, when the element *StaticOrDynamicConversion* is not received by the system in charge of the conversion (either the interoperability metadata doesn't comprise the element *StaticOrDynamicConversion* or no *static_dynamic_interoperability* metadata was received), the system is free to select the static or dynamic conversion.

In a first variant, when the element *StaticOrDynamicConversion* is not received by the system in charge of the conversion (either the interoperability metadata doesn't comprise the element *StaticOrDynamicConversion* or no *static_dynamic_interoperability* metadata was received), the system selects the static conversion.

In a second variant, when the element *StaticOrDynamicConversion* is not received by the system in charge of the conversion (either the interoperability metadata doesn't comprise the element *StaticOrDynamicConversion* or no *static_dynamic_interoperability* metadata was received), the system selects the dynamic conversion.

The element *StaticOrDynamicConversion* is transmitted either as a ninth element of the interoperability metadata or in the *static_dynamic_interoperability* metadata along the interoperability metadata as described in relation to Fig. 4.

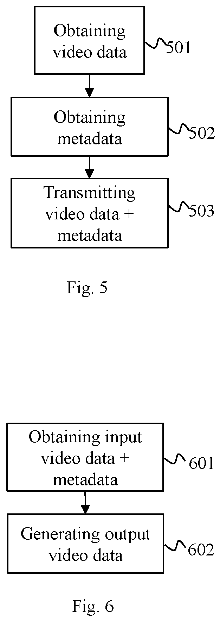

**Fig. 5** illustrates an example of process executed by a video source according to an embodiment.

The process of Fig. 5 is executed by a processing module of the video source. The video source is for example, the HDR source 200, the SDR source 201, the ITM tool 202A, 202B, 202C or 211 or the TM tool 204A or 204B.

In a step 501, the processing module obtains input video data in an input dynamic range. The input dynamic range may be HDR or SDR.

In a step 502, the processing module obtains interoperability metadata (or interoperability metadata and *static_dynamic_interoperability* metadata). The interoperability metadata (or interoperability metadata and *static_dynamic_interoperability* metadata) allows (i.e., guide) the conversion of the input video data in output video data in an output dynamic range different from the input dynamic range. The interoperability metadata or the *static_dynamic_interoperability* metadata comprise the element *StaticOrDynamicConversion.* The interoperability metadata (or interoperability metadata and *static_dynamic_interoperability* metadata) may characterize either the input video data in the input dynamic range or output video data to be obtained from the input video data after conversion from the input dynamic range to an output dynamic range. The output dynamic range is SDR when the input dynamic range is HDR. Otherwise, the output dynamic range is HDR when the input dynamic range is SDR. The element *StaticOrDynamicConversion* provide an indication of the type of conversion to may be applied.

In a step 503, the processing module transmits the input video data and the interoperability metadata (or interoperability metadata and *static_dynamic_interoperability* metadata). The input video data and the interoperability metadata (or interoperability metadata and *static_dynamic_interoperability* metadata) are for example transmitted from the HDR source 200 to the TM tool 204A and 204B. In another example, the input video data and the interoperability metadata (or interoperability metadata and *static_dynamic_interoperability* metadata) are transmitted from the HDR source 200 to a client system via HDR master control system 212.

**Fig. 6** illustrates an example process executed by a system in charge of converting video data from a first dynamic range to a second dynamic range according to an embodiment.

The process of Fig. 6 is executed by a processing module of the system in charge of converting video data from a first dynamic range to a second dynamic range. The system is for example, the TM tool 204A or 204B.

In a step 601, the processing module obtains input video data in an input dynamic range and interoperability metadata (or interoperability metadata and *static_dynamic_interoperability* metadata). Again, the input dynamic range could be HDR or SDR. In an example, the input video data and the interoperability metadata (or interoperability metadata and *static_dynamic_interoperability* metadata) are received by the TM tool 204A or 204B from the HDR source 200 or from the ITM tool 202A or 202B or 202C. In another example, the input video data and the interoperability metadata (or interoperability metadata and *static_dynamic_interoperability* metadata) are received by a system from the HDR source 200 or from the ITM tool 202A or 202B or 202C via the HDR control system 212 or via the SDR master control system 213.

In a step 602, the processing module converts the input video data in output video data in a second dynamic range using the interoperability metadata (or the interoperability metadata and the *static_dynamic_interoperability* metadata). For instance, the processing module selects a dynamic or a static conversion based on the element *StaticOrDynamicConversion.* Again, the output dynamic range is SDR when the input dynamic range is HDR and, the output dynamic range is HDR when the input dynamic range is SDR.

Adapted solutions are needed to transport HDR or SDR data along with interoperability metadata (or along with interoperability metadata and *static_dynamic_interoperability* metadata) either between modules of a production system (such as for example between the HDR source 200 or from the ITM tool 202A or 202B or 202C and the TM tools 204A and 204B of the live production system 20) or for distributing the HDR or SDR data and the interoperability metadata (or the interoperability metadata and the *static_dynamic*_*interoperability* metadata) to external systems after their production (for example via the Master central control system 21). Typical production systems (such as the live production system 20) use SDI (Serial Digital Interface) interconnections following the suite of SMPTE standards - for exchanging data inside the system. Ancillary channels of a SDI interface allow exchanging additional information such as metadata. For instance, metadata can be exchanged using a vertical ancillary channels (*SDI VANC* in the following) as described in the standard SMPTE ST 2108-1 (SMPTE ST 2108-1:2018, HDR/WCG Metadata Packing and Signaling in the Vertical Ancillary Data Space, 10/2018*).* The interoperability metadata (or the interoperability metadata and the *static_dynamic_interoperability* metadata) could also be exchanged using the same SDI based mechanism.

A first solution for transporting HDR or SDR data along with interoperability metadata (or along with the interoperability metadata and the *static_dynamic_interoperability* metadata) is based on SL-HDR1. SL-HDR1 (ETSI TS 103 433-1 v1.4.1, High-Performance Single Layer High Dynamic Range (HDR) System for use in Consumer Electronics devices; Part 1: Directly Standard Dynamic Range (SDR) Compatible HDR System (SL-HDR1), 08/2021*)* is a standard allowing representing an HDR content by an SDR signal with dynamic metadata. The SDR signal results from a tone mapping (TM) of the HDR content applying a tone mapping tool based on a tone mapping curve. The dynamic metadata represent an inverse tone mapping curve allowing back converting the SDR signal to a HDR signal.

As described in sections A.2.2.2 and A.2.2.4 of SL-HDR1, if a flag *sl_hdr_extension_present_flag* is set to "1", then any information can be embedded in SL-HDR1 metadata in the form of SL-HDR extension data bytes *sl_hdr*_*extension_data_byte.* In an embodiment, this option of SL-HDR1 is used to transport the interoperability metadata (or the interoperability metadata and the *static_dynamic_interoperability* metadata).

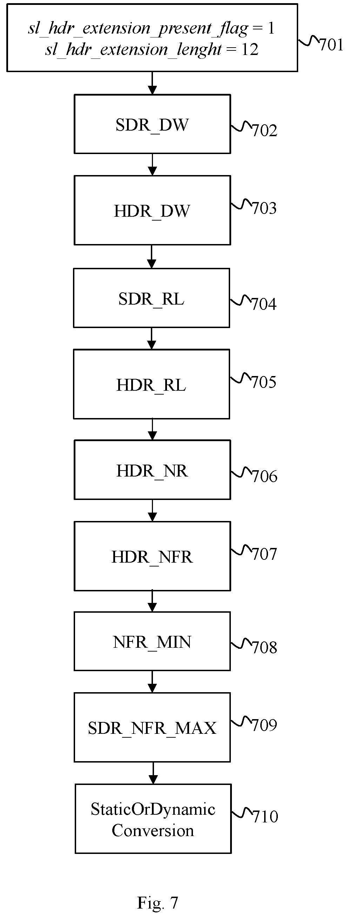

**Fig. 7** provide an example of process for introducing the Interoperability metadata comprising the element *StaticOrDynamicConversion* in the SL-HDR1 metadata. This process is implemented by a processing module of a HDR source (such as the HDR source 200) or by an ITM tool (such as the ITM tools 202A, 202B, 202C or 211). This process is for example executed in step 503.

In a step 701, the processing module sets the flag *sl_hdr_extension_present_flag* to one and a syntax element *sl_hdr_extension_length* to "16". The syntax element *sl_hdr_extension_length* represents the length in bytes of the SL-HDR extension data bytes.

In a step 702, the processing module signals the value in nits of the SDR diffuse white *SDR_DW* on two bytes of the SL-HDR extension data bytes *sl_hdr_extension_data_byte*[0] and *sl_hdr_extension_data_byte*[1], *sl_hdr_extension_data_byte*[0] being the least significant byte and *sl_hdr*_*extension_data_byte*[1] being the most significant byte of a 16 bits integer value.

In a step 703, the processing module signals the value in nits of the HDR diffuse white *HDR*_*DW* on two bytes of the SL-HDR extension data bytes *sl_hdr_extension_data_byte*[2] and *sl_hdr_extension_data_byte*[3], *sl_hdr_extension_data_byte*[2] being the least significant byte and *sl_hdr*_*extension_data_byte*[3] being the most significant byte of a "16" bits integer value.

In a step 704, the processing module signals the value in nits of the SDR reference level *SDR_RL* on two bytes of the SL-HDR extension data bytes *sl_hdr_extension_data_byte*[4] and *sl_hdr_extension_data_byte*[5], *sl_hdr_extension_data_byte*[4] being the least significant byte and *sl_hdr*_*extension_data_byte*[5] being the most significant byte of a 16 bits integer value.

In a step 705, the processing module signals the value in nits of the HDR reference level *HDR_RL* on two bytes of the SL-HDR extension data bytes *sl_hdr_extension_data_byte*[6] and *sl_hdr_extension_data_byte*[7], *sl_hdr_extension_data_byte*[6] being the least significant byte and *sl_hdr*_*extension_data_byte*[7] being the most significant byte of a "16" bits integer value.

In a step 706, the processing module signals the HDR Narrow Range value (in nits) *HDR_NR* on two bytes of the SL-HDR extension data bytes *sl_hdr_extension_data_byte*[8] and *sl_hdr_extension_data_byte*[9], *sl_hdr_extension_data_byte*[8] being the least significant byte and *sl_hdr_extension_data_byte*[9] being the most significant byte of a "16" bits integer value.

In a step 707, the processing module signals the HDR Narrow Full range value (in nits) *HDR_NFR* on two bytes of the SL-HDR extension data bytes *sl_hdr_extension_data_byte*[10] and *sl_hdr_extension_data_byte*[11], *sl_hdr_extension_data_byte*[10] being the least significant byte and *sl_hdr_hdr_extension_data_byte*[11] being the most significant byte of a "16" bits integer value.

In a step 708, the processing module signals the Narrow Full Range minimum value *NFR_MIN* on two bytes of the SL-HDR extension data bytes *sl_hdr_extension_data_byte*[12] and *sl_hdr_extension_data_byte*[13], *sl_hdr_extension_data_byte*[12] being the least significant byte and *sl_hdr_hdr_extension_data_byte*[13] being the most significant byte of a "16" bits integer value. The signaled value of *NFR_MIN* can be defined by convention to be representative of a "10" bits value for instance. For systems that are managing signals with different bit depth such as 8bits or 12bits content, this 10bits codeword can therefore easily be converted for 8bits codeword, 12bits codeword, ...

In a step 709, the processing module signals the SDR Narrow Full Range maximum value *SDR_NFR_MAX* on two bytes of the SL-HDR extension data bytes *sl_hdr_extension_data_byte*[14] and *sl_hdr_extension_data_byte*[15], *sl_hdr_extension_data_byte*[14] being the least significant byte and *sl_hdr_extension_data_byte*[15] being the most significant byte of a "16" bits integer value. The signaled value of SDR_NFR_MAX can be defined by convention to be representative of a 10 bits value for instance. For systems that are managing signals with different bit depth such as 8bits or 12bits content, this 10bits codeword and can therefore be converted for 8bits codeword, 12bits codeword, ...

In a step 710, the processing module signals the element *StaticOrDynamicConversion* for instance on "1" or "2" bits.

If some metadata are already present in the SL-HDR extension data bytes, the "9" elements of the interoperability metadata can also be added before or after these already existing metadata. Any other representation of the "9" elements in the SL-HDR1 metadata is also possible for instance, with less or more bytes for each information, not byte aligned, etc.

The *static dynamic interoperability* metadata may be transported similarly in the SL-HDR extension data bytes.

Another solution for transporting the video data along with the interoperability metadata (and optionally the *static dynamic interoperability* metadata) consist in transporting the metadata in SEI messages.

Video compression standards such as VVC, HEVC and AVC defines messages, called *supplemental enhancement information* (SEI) messages, comprising metadata providing information relative to a video stream. A SEI message is a data container or a syntax structure associated with the video stream.

SEI messages offer a solution for transporting the interoperability metadata. A new SEI message dedicated to the transport of the Interoperability metadata (or of interoperability metadata and *static_dynamic_interoperability* metadata) may be defined.

These SEI messages could be transported in the form of SDI VANC messages as defined in SMPTE ST 2108-1.

One can note that these SEI messages could alternatively be inserted in a transport stream along with an encoded video stream distributed by the master central control system.

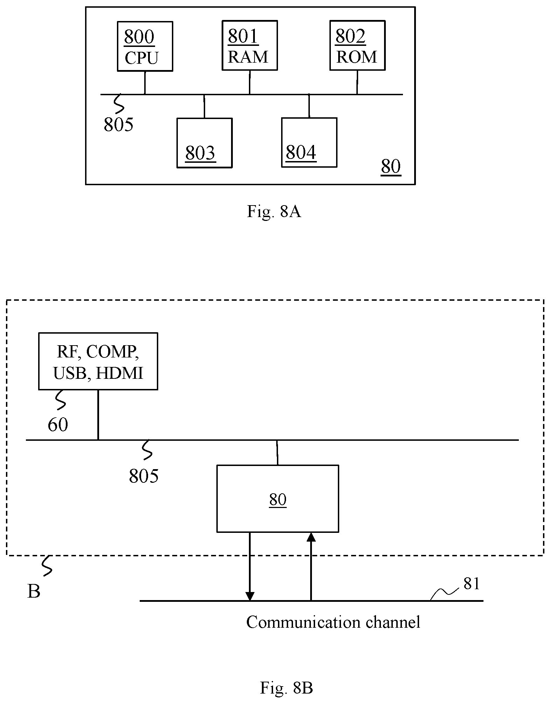

**Fig. 8A** illustrates schematically an example of hardware architecture of a processing module 80 comprised in the live production system 20, in a system or module comprised in the live production system 20 such as the ITM tools 202A, 202B and 202C or the TM tools 204B and 204A, in the master central control system 21 or in a system or module of the master central control system 21 such as the ITM tool 211, or in the devices 22A and 22B. The processing module 80 comprises, connected by a communication bus 805: a processor or CPU (central processing unit) 800 encompassing one or more microprocessors, general purpose computers, special purpose computers, and processors based on a multi-core architecture, as non-limiting examples; a random access memory (RAM) 801; a read only memory (ROM) 802; a storage unit 803, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive, or a storage medium reader, such as a SD (secure digital) card reader and/or a hard disc drive (HDD) and/or a network accessible storage device; at least one communication interface 804 for exchanging data with other modules, devices, systems or equipment. The communication interface 804 can include, but is not limited to, a transceiver configured to transmit and to receive data over a communication network 81. The communication interface 804 can include, but is not limited to, a modem or a network card.

For example, the communication interface 804 enables for instance the processing module 80 to HDR or SDR data along with interoperability metadata.

The processor 80 is capable of executing instructions loaded into the RAM 801 from the ROM 802, from an external memory (not shown), from a storage medium, or from a communication network. When the processing module 80 is powered up, the processor 800 is capable of reading instructions from the RAM 801 and executing them. These instructions form a computer program causing, for example, the implementation by the processor 800 of the HDR source 200, of the ITM tools 202A, 202B and 202C and 211 of the method of Fig. 5 and the implementation by the processor 800 of the TM tools 204A and 204B of the method of Fig. 6.

All or some of the algorithms and steps of said processes may be implemented in software form by the execution of a set of instructions by a programmable machine such as a DSP (digital signal processor) or a microcontroller, or be implemented in hardware form by a machine or a dedicated component such as a FPGA (field-programmable gate array) or an ASIC (application-specific integrated circuit).

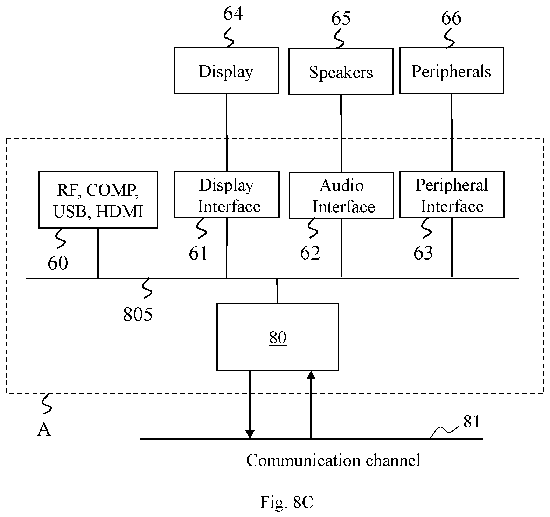

**Fig. 8C** illustrates a block diagram of an example of system A that corresponds to device 22A or 22B in which various aspects and embodiments are implemented.

System A can be embodied as a device including various components or modules and is configured to generate a SDR or HDR content adapted to be displayed on adapted display devices. Examples of such system include, but are not limited to, various electronic systems such as personal computers, laptop computers, smartphones, tablet, TV, or set top boxes. Components of system A, singly or in combination, can be embodied in a single integrated circuit (IC), multiple ICs, and/or discrete components. For example, in at least one embodiment, the system A comprises one processing module 80 that implements a decoding of a SDR or HDR content. In various embodiments, the system A is communicatively coupled to one or more other systems, or other electronic devices, via, for example, a communications bus or through dedicated input and/or output ports.

The input to the processing module 80 can be provided through various input modules as indicated in block 60. Such input modules include, but are not limited to, (i) a radio frequency (RF) module that receives an RF signal transmitted, for example, over the air by a broadcaster, (ii) a component (COMP) input module (or a set of COMP input modules), (iii) a Universal Serial Bus (USB) input module, and/or (iv) a High Definition Multimedia Interface (HDMI) input module. Other examples, not shown in FIG. 8C, include composite video.

In various embodiments, the input modules of block 60 have associated respective input processing elements as known in the art. For example, the RF module can be associated with elements suitable for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF module of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF module includes an antenna.

Additionally, the USB and/or HDMI modules can include respective interface processors for connecting system A to other electronic devices across USB and/or HDMI connections. It is to be understood that various aspects of input processing, for example, Reed-Solomon error correction, can be implemented, for example, within a separate input processing IC or within the processing module 80 as necessary. Similarly, aspects of USB or HDMI interface processing can be implemented within separate interface ICs or within the processing module 80 as necessary. The demodulated, error corrected, and demultiplexed stream is provided to the processing module 80.

Various elements of system A can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system A, the processing module 80 is interconnected to other elements of said system A by the bus 805.

The communication interface 804 of the processing module 80 allows the system A to communicate on the communication network 81. The communication network 81 can be implemented, for example, within a wired and/or a wireless medium.

Data is streamed, or otherwise provided, to the system A, in various embodiments, using a wireless network such as a Wi-Fi network, for example IEEE 802.11 (IEEE refers to the Institute of Electrical and Electronics Engineers). The Wi-Fi signal of these embodiments is received over the communications network 81 and the communications interface 804 which are adapted for Wi-Fi communications. The communications network 81 of these embodiments is typically connected to an access point or router that provides access to external networks including the Internet for allowing streaming applications and other over-the-top communications. Still other embodiments provide streamed data to the system A using the RF connection of the input block 60. As indicated above, various embodiments provide data in a non-streaming manner, for example, when the system A is a smartphone or a tablet. Additionally, various embodiments use wireless networks other than Wi-Fi, for example a cellular network or a Bluetooth network.

The system A can provide an output signal to various output devices using the communication network 81 or the bus 805. For example, the system A can provide a decoded SDR or **HDR** signal.

The system A can provide an output signal to various output devices, including a display 64 (if for example the system A is a set top box provided a decoded SDR or **HDR** signal to a display device), speakers 65, and other peripheral devices 66. The display 64 of various embodiments includes one or more of, for example, a touchscreen display, an organic light-emitting diode (OLED) display, a curved display, and/or a foldable display. The display 64 can be for a television, a tablet, a laptop, a cell phone (mobile phone), or other devices. The display 64 can also be integrated with other components (for example, as in a smart phone), or separate (for example, an external monitor for a laptop). The display device 64 is SDR or HDR content compatible. The other peripheral devices 66 include, in various examples of embodiments, one or more of a stand-alone digital video disc (or digital versatile disc) (DVR, for both terms), a disk player, a stereo system, and/or a lighting system. Various embodiments use one or more peripheral devices 66 that provide a function based on the output of the system A. For example, a disk player performs the function of playing the output of the system A.

In various embodiments, control signals are communicated between the system A and the display 64, speakers 65, or other peripheral devices 66 using signaling such as AV.Link, Consumer Electronics Control (CEC), or other communications protocols that enable device-to-device control with or without user intervention. The output devices can be communicatively coupled to system A via dedicated connections through respective interfaces 61, 62, and 63. Alternatively, the output devices can be connected to system A using the communication network 81 via the communication interface 804. The display 64 and speakers 65 can be integrated in a single unit with the other components of system A in an electronic device such as, for example, a television. In various embodiments, the display interface 61 includes a display driver, such as, for example, a timing controller (T Con) chip.

The display 64 and speakers 65 can alternatively be separate from one or more of the other components, for example, if the RF module of input 60 is part of a separate set-top box. In various embodiments in which the display 64 and speakers 65 are external components, the output signal can be provided via dedicated output connections, including, for example, HDMI ports, USB ports, or COMP outputs.

**Fig. 8B** illustrates a block diagram of an example of the system B adapted to implement the live production system 20 or a module or device of the live production system 20 or the master central control system 21, or a module or a device of the master central control system 21 in which various aspects and embodiments are implemented.

System B can be embodied as a device including the various components and modules described above and is configured to perform one or more of the aspects and embodiments described in this document.

Examples of such devices include, but are not limited to, various electronic devices such as personal computers, laptop computers, a camera, a smartphone and a server. Elements or modules of system B, singly or in combination, can be embodied in a single integrated circuit (IC), multiple ICs, and/or discrete components. For example, in at least one embodiment, the system B comprises one processing module 80 that implement either an ITM tool (202A, 202B, 202C, 211) or a TM tool (204A, 204B). In various embodiments, the system B is communicatively coupled to one or more other systems, or other electronic devices, via, for example, a communications bus or through dedicated input and/or output ports.

The input to the processing module 80 can be provided through various input modules as indicated in block 60 already described in relation to Fig. 8C.

Various elements of system B can be provided within an integrated housing. Within the integrated housing, the various elements can be interconnected and transmit data therebetween using suitable connection arrangements, for example, an internal bus as known in the art, including the Inter-IC (I2C) bus, wiring, and printed circuit boards. For example, in the system B, the processing module 80 is interconnected to other elements of said system B by the bus 805.

The communication interface 804 of the processing module 80 allows the system B to communicate on the communication network 81. The communication network 81 can be implemented, for example, within a wired and/or a wireless medium.

Data is streamed, or otherwise provided, to the system B, in various embodiments, using a wireless network such as a Wi-Fi network, for example IEEE 802.11 (IEEE refers to the Institute of Electrical and Electronics Engineers). The Wi-Fi signal of these embodiments is received over the communications network 81 and the communications interface 804 which are adapted for Wi-Fi communications. The communications network 81 of these embodiments is typically connected to an access point or router that provides access to external networks including the Internet for allowing streaming applications and other over-the-top communications. Still other embodiments provide streamed data to the system B using the RF connection of the input block 60. As indicated above, various embodiments provide data in a non-streaming manner.

When a figure is presented as a flow diagram, it should be understood that it also provides a block diagram of a corresponding apparatus. Similarly, when a figure is presented as a block diagram, it should be understood that it also provides a flow diagram of a corresponding method/process.

One or more embodiments provide a computer program comprising instructions which when executed by one or more processors cause such processors to perform the methods according to any of the embodiments described above. One or more embodiments also provide a computer readable storage medium having stored thereon instructions for encoding or decoding video data according to the methods described above.

One or more embodiments provide a computer readable storage medium having stored thereon data generated according to the methods described above. One or more embodiments also provide a method and apparatus for transmitting or receiving data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

We described above a number of embodiments. Features of these embodiments can be provided alone or in any combination. Further, embodiments can include one or more of the following features, devices, or aspects, alone or in any combination, across various claim categories and types:
- A bitstream or signal that includes one or more of the described SDR or HDR data and the interoperability metadata (or of interoperability metadata and *static dynamic interoperability* metadata), or variations thereof.
- Creating and/or transmitting and/or receiving and/or decoding a bitstream or signal that includes one or more of the described SDR or HDR data and/or interoperability metadata (or interoperability metadata and *static dynamic interoperability* metadata), or variations thereof.
- A server, camera, TV, set-top box, cell phone, tablet, personal computer or other electronic device that performs at least one of the embodiments described.
- A TV, set-top box, cell phone, tablet, personal computer or other electronic device that performs at least one of the embodiments described, and that displays (e.g. using a monitor, screen, or other type of display) a resulting image.
- A TV, set-top box, cell phone, tablet, personal computer or other electronic device that tunes (e.g. using a tuner) a channel to receive a signal including encoded SDR or HDR data and interoperability metadata (or interoperability metadata and *static_dynamic_interoperability* metadata), and performs at least one of the embodiments described.
- A TV, set-top box, cell phone, tablet, or other electronic device that receives (e.g. using an antenna) a signal over the air that includes SDR or HDR data and interoperability metadata (or interoperability metadata and *static dynamic interoperability* metadata), and performs at least one of the embodiments described.
- A server, camera, cell phone, tablet, personal computer or other electronic device that tunes (e.g. using a tuner) a channel to transmit a signal including SDR or HDR data and interoperability metadata (or interoperability metadata and *static dynamic interoperability* metadata), and performs at least one of the embodiments described.
- A server, camera, cell phone, tablet, personal computer or other electronic device that transmits (e.g. using an antenna) a signal over the air that includes SDR or HDR data and interoperability metadata (or interoperability metadata and *static_dynamic_interoperability* metadata), and performs at least one of the embodiments described.

## Claims

1. A method comprising:
obtaining (501) input video data in an input dynamic range;
obtaining (502) metadata allowing a conversion of the input video data in output video data in an output dynamic range different from the input dynamic range; and,
transmitting (503) the input video data and the metadata;
wherein, the metadata comprises an element allowing selecting between a static conversion based on fixed computation operations independent of the input video data and a dynamic conversion based on computation operations depending of the input video data for the conversion of the input video data in the output video data.

2. A device comprising electronic circuitry configured for:
obtaining (501) input video data in an input dynamic range;
obtaining (502) metadata allowing a conversion of the input video data in output video data in an output dynamic range different from the input dynamic range; and,
transmitting (503) the input video data and the metadata;
wherein, the metadata comprises one element allowing selecting between a static conversion based on fixed computation operations independent of the input video data and a dynamic conversion based on computation operations depending of the input video data for the conversion of the input video data in the output video data.

3. The method of claim 1 or the device of claim 2 wherein the element is a flag indicating with a first value to select the static conversion and with a second value to select the dynamic conversion.

4. The method of claim 1 or the device of claim 2 wherein the element is a syntax element indicating with a first value to select the static conversion, with a second value to select the dynamic conversion and with a third value that no conversion method is imposed.

5. The method of claim 1 or the device of claim 2 wherein the element is a syntax element indicating a preferred conversion method between the static conversion and the dynamic conversion.

6. The method of claim 1 or the device of claim 2 wherein, the input dynamic range is a high dynamic range and the output dynamic range is standard dynamic range or the input dynamic range is a standard dynamic range and the output dynamic range is high dynamic range.

7. The method of claim 1 or the device of claim 2 wherein the metadata are transmitted using ancillary channels of a SDI interface or are embedded in SL-HDR1 metadata or are transmitted using a SEI message.

8. A method comprising:
obtaining (601) input video data in an input dynamic range and a value of an element comprised in metadata allowing selecting between a static conversion based on fixed computation operations independent of the input video data and a dynamic conversion based on computation operations depending of the input video data to convert the input video data in output video data in an output dynamic range different from the input dynamic range; and,
converting (602) the input video data in the output video data applying a conversion selected between the static conversion and the dynamic conversion based on the value of the element.

9. A device comprising electronic circuitry configured for:
obtaining (601) input video data in an input dynamic range and a value of an element comprised in metadata allowing selecting between a static conversion based on fixed computation operations independent of the input video data and a dynamic conversion based on computation operations depending of the input video data to convert the input video data in output video data in an output dynamic range different from the input dynamic range; and,
converting (602) the input video data in the output video data applying a conversion selected between the static conversion and the dynamic conversion based on the value of the element.

10. The method of claim 8 or the device of claim 9 wherein the element is a flag indicating with a first value to select the static conversion and with a second value to select the dynamic conversion.

11. The method of claim 8 or the device of claim 9 wherein the element is a syntax element indicating with a first value to select the static conversion, with a second value to select the dynamic conversion and with a third value that no conversion method is imposed.

12. The method of claim 8 or the device of claim 9 wherein the element is a syntax element indicating a preferred conversion method between the static conversion and the dynamic conversion.

13. The method of claim 8 or the device of claim 9 wherein, responsive to the element is not received, the value of the element is inferred as indicating that no conversion method is imposed or the value of the element is inferred as indicating that the static conversion is preferred or the value of the element is inferred as indicating that the dynamic conversion is preferred.

14. The method of claim 1 or the device of claim 2 wherein, the input dynamic range is a high dynamic range and the output dynamic range is standard dynamic range or the input dynamic range is a standard dynamic range and the output dynamic range is high dynamic range.

15. A signal comprising metadata comprising an element allowing selecting between a static conversion and a dynamic conversion for a conversion of input video data in an input dynamic range into output video data in an output dynamic range, the static conversion being based on fixed computation operations independent of the input video data and the dynamic conversion being based on computation operations depending of the input video data.
